# EUROPÄISCHE PATENTSCHRIFT

(11) **EP 4 332 306 B1**
(45) Veröffentlichungstag und Bekanntmachung des Hinweises auf die Patenterteilung: **28.01.2026**
(21) Anmeldenummer: 23190332.9
(22) Anmeldetag: 08.08.2023
(51) Int. Cl.: E02F 9/08, B66C 1/58, B66C 23/90, E02F 3/36, E02F 3/43, E02F 9/20

(54) **LOGHANDLER**
LOG HANDLER
MANIPULATEUR DE JOURNAL

(30) Priorität: 31.08.2022 DE 202022104926 U
(43) Veröffentlichungstag der Anmeldung: 06.03.2024
(73) Patentinhaber: Liebherr-Werk Bischofshofen GmbH, 5500 Bischofshofen (AT)
(72) Erfinder: Eder, Marco, 5700 Zell am See (AT); Ortner, Johannes, 5750 Saalfelden (AT)
(74) Vertreter: Lorenz Seidler Gossel Part. mbB

(56) Entgegenhaltungen:
- DE-A1- 102018 105 853
- US-A- 4 511 974
- US-A1- 2018 327 238

## Beschreibung

Die vorliegende Erfindung betrifft einen Loghandler mit einem Radlader-Grundgerät, an dem sich eine relativ zu dem Grundgerät bewegbare- Arbeitsausrüstung befindet, die ein Werkzeug, insbesondere eine Holzgreifereinrichtung aufweist.

Loghandler werden zum Handling von Holzwerkstoffen, insbesondere von Baumstämmen benötigt. Sie weisen üblicherweise eine Greifereinrichtung auf, mittels derer Baumstämme aufgenommen werden können. Die bewegbar an dem Radlader-Grundgerät angeordnete Arbeitsausrüstung dient zum Anheben bzw. Bewegen des mittels der Greifeinrichtung aufgenommenen Holzes.

An dieser Stelle wird angemerkt, dass die Arbeitsausrüstung aus mehreren zueinander relativ bewegbaren Bauteilen bestehen bzw. diese umfassen kann, vorzugsweise aus einem Ausleger und einem Schwenkarm.

Loghandler werden meist in der Holzverarbeitungs-Industrie betrieben, teilweise auch in unwegsamen Gelände, was besondere Anforderungen hinsichtlich der Kippsicherheit bedeutet.

Der vorliegenden Erfindung liegt die Aufgabe zugrunde, einen Loghandler der eingangs genannten Art dahingehend weiterzubilden, dass stets ein sicherer und komfortabler Betrieb gewährleistet ist.

Diese Aufgabe wird durch einen Loghandler mit den Merkmalen des Anspruchs 1 gelöst.

Danach ist vorgesehen, dass der Loghandler erste Mittel aufweist, die ausgebildet sind, die Nutzlast zu ermitteln, und dass der Loghandler zweite Mittel aufweist, die ausgebildet sind, dass diese basierend auf der durch die ersten Mittel ermittelten Nutzlast und basierend auf Geometriedaten des Loghandlers einen für die Standsicherheit des Loghandlers repräsentativen Parameter zu bestimmen.

Die ersten Mittel dienen somit zur Ermittlung der Nutzlast, d.h. der in der Greifereinrichtung oder dem sonstigen Werkzeug befindlichen Last.

Aus dem Stand der Technik der Radlader ist es bekannt, eine Nutzlastermittlung durchzuführen. Radlader sind oftmals mit einer Wiegeeinrichtung ausgestattet, welche ebenfalls eine Nutzlastermittlung zugrunde liegt.

Die Nutzlast kann beispielsweise über eine Druckmessung in einem oder mehreren Hydraulikzylindern der Arbeitsausrüstung erfolgen. Die Ermittlung der Nutzlast ist dem Fachmann bekannt.

Aus dem Stand der Technik offenbart Dokument D1 (DE102018105853A1) einen Teleradlader mit einem teleskopierbaren Ausleger, bei dem unter anderem der Knickwinkel, der Druck im Hubzylinder sowie geometrische Parameter zur Berechnung der Standsicherheit herangezogen werden. Dokument D2 (US20180327238A1) beschreibt ein Ladesystem mit einem Greifer, bei dem die Position der Auslegerglieder und das Gewicht der Last ermittelt werden, um eine Reichweitenbegrenzung vorzunehmen und instabile Zustände zu vermeiden. D2 bildet dabei den Oberbegriff der Ansprüche 1 und 2.

Der erfindungsgemäße Loghandler weist darüber hinaus zweite Mittel auf, die dazu dienen, basierend auf der durch die ersten Mittel ermittelten Nutzlast und basierend auf Geometriedaten des Loghandlers einen für die Standsicherheit des Loghandlers repräsentativen Parameter zu bestimmen. Die Erfindung besteht somit nicht in der bereits bekannten Nutzlastermittlung, sondern in der Verwendung der ermittelten Nutzlast für einen weiteren Zweck, nämlich zur Bestimmung bzw. Gewährleistung der Standsicherheit des Loghandlers.

Dabei ist beispielsweise denkbar, dass die zweiten Mittel dazu dienen, dass Moment z.B. um die Vorderachse bzw. um einen Vorderreifen des Loghandlers zu ermitteln.

Das aktuelle Moment kann durch Vergleichsmittel mit einem Grenzwert, d.h. mit einem Kippmoment verglichen werden.

Somit kann der Loghandler ein Standsicherheitsassistenz-System aufweisen, mit dem sichergestellt wird, dass das tatsächliche Moment um einen potentiellen Kipppunkt unter dem Kippmoment bleibt.

Es können Begrenzungsmittel vorhanden sein, die ein Überschreiten dieses Grenzwertes verhindern, um selbst bei einem Bedienungsfehler ein Kippen des Loghandlers sicher zu verhindern.

Die vorliegende Erfindung betrifft des Weiteren einen Loghandler mit den Merkmalen des Anspruchs 2. Danach ist vorgesehen, dass der Loghandler erste Mittel aufweist, die ausgebildet sind, die Nutzlast zu ermitteln, und dass der Loghandler dritte Mittel aufweist, die ausgebildet sind, dass diese basierend auf der durch die ersten Mittel ermittelten Nutzlast und basierend auf Geometriedaten des Loghandlers eine Reichweitenbegrenzung der Arbeitsausrüstung, insbesondere die horizontale Ausladung der Nutzlast vornehmen.

Auch in dieser Ausgestaltung der Erfindung wird die ermittelte Nutzlast verwendet, um eine andere Größe zu ermitteln, nämlich die bei der ermittelten Nutzlast maximal zulässige horizontale Ausladung, d.h. Reichweite, bei der der Loghandler noch nicht kippt.

Wie auch bei dem oben genannten Standsicherheitsassistenten werden bei der intelligenten Reichweitenbegrenzung Geometriedaten und die Nutzlast herangezogen. Aus dem Stand der Technik sind Arbeitsmaschinen bekannt, bei denen die Reichweite, d.h. die maximal zulässige horizontale Ausladung stets unter der Annahme maximaler Nutzlast bestimmt wird.

Erfindungsgemäß ist demgegenüber vorgesehen, dass die tatsächlich vorhandene und nicht die gerätespezifische maximal mögliche Nutzlast für die maximale horizontale Ausladung der Arbeitsausrüstung herangezogen wird. Somit ist bei entsprechend geringerer Nutzlast im Werkzeug eine größere horizontale Ausladung möglich.

Auch ein Loghandler mit einer Kombination der Merkmale der Ansprüche 1 und 2 ist von der Erfindung umfasst.

Bei den oben genannten Geometriedaten kann es sich beispielsweise um die Relativposition(en) der Bauteile der Arbeitsausrüstung als auch den Lenkwinkel der Räder handeln. So sind die Standsicherheit und die Reichweite der horizontalen Ausladung bei geradestehenden Rädern größer als bei eingeschlagenen Rädern.

In weiterer Ausgestaltung der Erfindung ist vorgesehen, dass das Radlader-Grundgerät einen Vorderwagen und einen Hinterwagen aufweist und dass die Geometriedaten den Knickwinkel zwischen Vorder- und Hinterwagen umfassen. Ist der Knickwinkel gleich Null, d.h. liegen Vorder- und Hinterwagen in einer Linie, ist die Standsicherheit und die Reichweite der horizontalen Ausladung größer als bei abgewinkeltem Vorderwagen.

Denkbar ist es weiterhin, dass der Loghandler ein Display aufweist, in dem die Standsicherheit oder der Wert des dafür repräsentativen Parameters angezeigt wird. So kann der Führer des Loghandlers stets einsehen, wie groß die Standsicherheit bzw. das Moment ist und/oder wie groß der Abstand des aktuellen Drehmoments zu einem Kippmomentgrenzwert ist.

Auch ist es möglich, dass der Loghandler ein Display aufweist, in dem die aktuelle horizontale Auslegung und/oder deren Abstand zu einem Reichweitengrenzwert angezeigt wird.

Denkbar ist es, dass ein Kennfeld hinterlegt ist, das den zulässigen Arbeitsbereich der Arbeitsausrüstung in Abhängigkeit der Höhe der Nutzlast, der Abstand der Nutzlast von dem Vorderreifen des Radlader-Grundgerätes und von der Nutzlast wiedergibt.

Wie vorgestehend ausgeführt, besteht eine bevorzugte Ausgestaltung der Erfindung darin, dass der Loghandler eine vorzugsweise nutzlastabhängige Reichweitenbegrenzung des Auslegers bzw. der Arbeitsausrüstung in horizontaler Richtung aufweist.

In einer weiteren Ausgestaltung ist vorgesehen, dass der Loghandler eine Steuereinrichtung aufweist, die ausgebildet ist, dass bei Erreichen eines Grenzwertes der maximalen horizontalen Ausladung, welche durch eine Hubbewegung des Auslegers der Arbeitsausrüstung hervorgerufen wird, durch automatisches Gegensteuern des Schwenkarms verhindert wird, dass sich die horizontale Ausladung der Arbeitsausrüstung weiter erhöht.

Somit wird in dieser Ausgestaltung der Erfindung die Bewegung des Auslegers bzw. der Arbeitsausrüstung nicht mehr angehalten, wenn ein Höhengrenzwert erreicht wird, sondern mittels Steuerungseingriff der Schwenkarm der Arbeitsausrüstung zum Grundgerät hinbewegt, um einer Zunahme der horizontalen Ausladung entgegenzuwirken, was als gesteigerter Bedienkomfort wahrgenommen wird, da die Bewegung nicht angehalten werden muss.

Die Arbeitsausrüstung weist vorzugsweise einen Schwenkarm und einen daran schwenkbar angeordneten Ausleger auf. An Letzterem befindet sich das Werkzeug.

Vorzugsweise ist ein Schwenkzylinder zum Verschwenken des Schwenkarms relativ zu dem Radlader-Grundgerät nach vorne und hinten und ein Hubzylinder zum Verschwenken des Auslegers relativ zu dem Schwenkarm nach oben und unten vorgesehen.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden.

Weitere Einzelheiten und Vorteile der Erfindung werden anhand eines in der Zeichnung dargestellten Ausführungsbeispiels näher erläutert.

Es zeigen:
- Figur 1:: eine schematische Seitenansicht eines Loghandlers gemäß der Erfindung,
- Figur 2:: eine schematische Seitenansicht eines Loghandlers gemäß der Erfindung mit angedeutetem Drehmoment um die Vorderräder,
- Figur 3:: eine schematische Draufsicht auf einen Loghandler gemäß der Erfindung im geraden und im genickten Zustand und
- Figur 4:: ein Kennfeld zum Zwecke der Reichweitenbegrenzung.

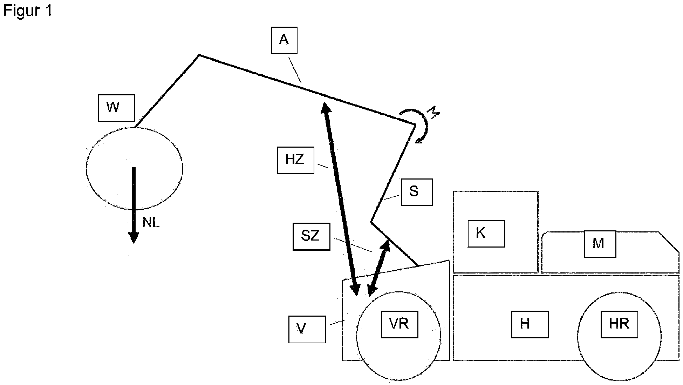

Gemäß Figur 1 weist der Loghandler ein Radlader-Grundgerät mit einem Vorderwagen V und einen Hinterwagen H auf. Beide stehen um ein Knickgelenk um eine senkrechte Achse schwenkbar miteinander in Verbindung.

An dem Vorderwagen befinden sich zwei Vorderräder VR und an dem Hinterwagen befinden sich zwei Hinterräder HR.

Der Hinterwagen umfasst des Weiteren die Führerkabine K sowie den Maschinenraum M.

An dem Vorderwagen V ist der Schwenkarm S um eine horizontale Achse schwenkbar angeordnet. Die Betätigung erfolgt mittels des Schwenkzylinders SZ.

Schwenkbar an dem Ende des Schwenkarms S ist der Ausleger A angeordnet, dessen Höhenposition mittels des Hubzylinders HZ verstellbar ist.

Mit W ist das am Ende des Auslegers angeordnete Werkzeug, insbesondere ein Greiferwerkzeug gekennzeichnet.

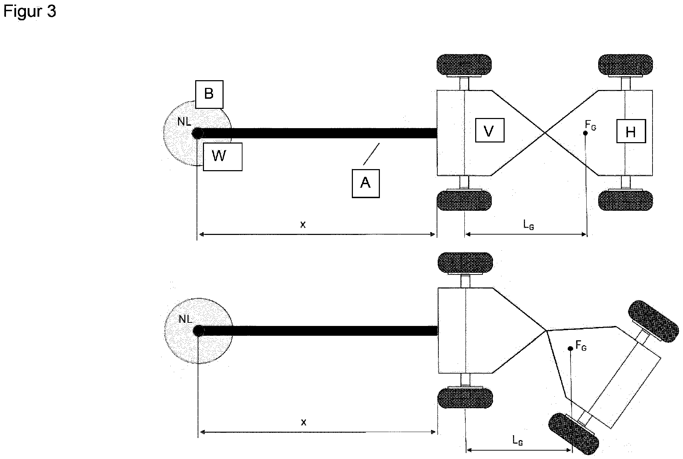

In dem Werkzeug befindet sich die in Figur 3 in Form von Baumstämmen B gekennzeichnete Nutzlast NL, die eine Kraft nach unten ausübt.

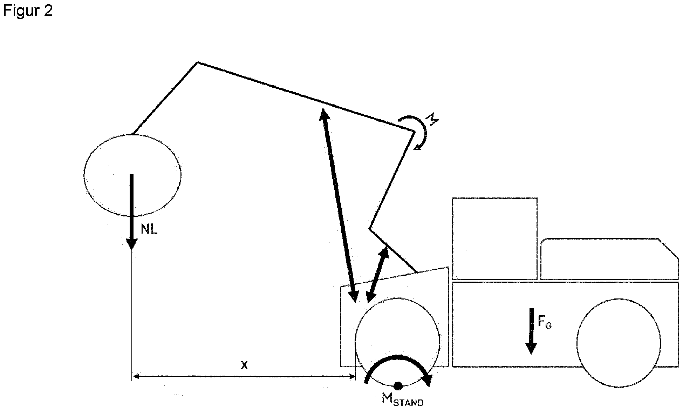

Figur 2 zeigt denselben Loghandler wie Figur 1. In Figur 2 ist mit F_{G} die Gewichtskraft im Schwerpunkt des Radlader-Grundwagens gezeigt, die die Gewichtskraft des Loghandlers ohne Nutzlast ist.

Um die Auflagefläche des Vorderrads ergibt sich je nach der Größe der Kräfte (Nutzlast und Gewichtskraft) ein Moment M_{STAND}. Übersteigt dieses einen Grenzwert, d.h. erreicht es den Wert für das Kippmoment, kippt der Loghandler gemäß Figur 2 um das Vorderrad entgegen dem Uhrzeigersinn, was selbstverständlich unerwünscht ist.

Um dies zu verhindern, wird aus der Nutzlast sowie aus einer oder mehreren geometrischen Größen, wie Höhe der Nutzlast, Abstand der Nutzlast zum Vorderreifen, Lenkwinkel, Knickwinkel etc. berechnet, welches Drehmoment an dem Vorderreifen anliegt. Dabei wird sichergestellt, dass sich kein resultierendes Moment ergibt, das entgegen dem Uhrzeigersinn verläuft, d.h. dass kein Kippmoment auftritt.

Das Drehmoment an dem Vorderreifen wird unter Nutzung der Nutzlast ermittelt.

Diese kann beispielsweise aus dem in dem Hubzylinder mittels eines Sensors gemessenen Druckes, dem sich zwischen Schwenkarm und Ausleger anliegenden Moment M und geometrischen Größen ermittelt werden.

In die Bestimmung des Drehmoments und somit der Standsicherheit kann als eine Kenngröße der Knickwinkel des Radlader-Grundgerätes eingehen, wie dies in Figur 3 gezeigt ist.

Ist das Grundgerät gerade (obere Ansicht), ist der Abstand L_{G} zwischen dem Schwerpunkt des Loghandlers und dessen Vorderrädermitte (L_{G}, _{gerade}) größer als bei einem eingenickten Grundgerät (L_{G}, _{genickt}), wie dies aus der unteren Ansicht hervorgeht. Somit kann bei geradem Grundgerät eine höhere Nutzlast aufgenommen werden, ohne dass es zu einem Kippen des Loghandlers kommt, als bei einem genickten Grundgerät.

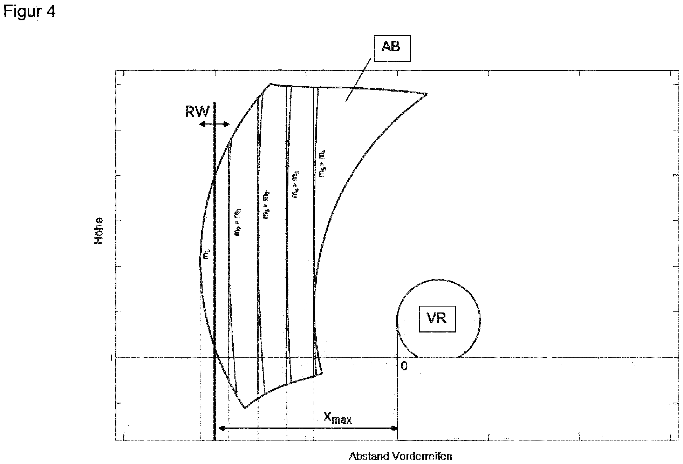

In Figur 4 ist ein Kennfeld des Arbeitsbereiches AB des Loghandlers gezeigt. Dieses kann abrufbar in einem Speicher des Gerätes hinterlegt sein. Auf der Ordinate ist die Höhe der Nutzlast über dem Boden und auf der Abszisse der Abstand der Nutzlast von dem Vorderreifen des Loghandlers gezeigt.

Mit m ist die tatsächliche Nutzlast gekennzeichnet. Der zulässige Arbeitsbereich ist rechts durch die gekrümmte Linie, durch die obere und untere Linke und durch die jeweils linke Linie begrenzt, die mit dem Index m₁, m₂, ... m₅ gekennzeichnet ist. Je höher der Index, desto größer ist die Nutzlast.

So ist bei einer vergleichsweise hohen Nutzlast m₅ bei gleicher Höhe die Reichweite, d.h. die maximal mögliche horizontale Ausladung geringer als bei geringerer Nutzlast m₁.

Bewegt der Maschinenführer bei einer gegebenen Nutzlast, z.B. m₄ durch Betätigung des Hubzylinders HZ die Last nach oben, gelangt das Gerät an seine linke Begrenzungslinie des Arbeitsbereiches, die nicht überfahren werden kann. Das Gerät erkennt dies, und verhindert durch Betätigung des Schwenkzylinders SZ, dass die horizontale Ausladung der Nutzlast vergrößert wird, um ein Kippen zu verhindern.

Mit dem Begriff "Reichweitenbegrenzung" RW ist eine nutzlastabhängige Begrenzung der Reichweite gezeigt, die in dieser Ausführungsform nicht überfahren werden kann. Wenn die tatsächliche Nutzlast genau einen der Werte m₁, m₂ etc. aufweist, gilt der entsprechend mit dieser Last gekennzeichnete Bereich, der links durch eine gekrümmte Linie begrenzt ist, wie dies in Figur 4 gezeigt ist.

Wenn die tatsächliche Nutzlast beispielsweise zwischen m₁ und m₂ liegt, wird der Arbeitsbereich links durch die vertikale Linie "Reichweitenbegrenzung" begrenzt. Somit bildet in diesem Fall die vertikale Linie der Reichweitenbegrenzung die linke Grenze des Arbeitsbereichs, die nicht überfahren werden kann. Entsprechendes gilt für Nutzlasten zwischen m₂ und m₃, m₃ und m₄ etc., wobei die dargestellte Linie für den beispielhaften Fall gilt, dass die Nutzlast zwischen m₁ und m₂ liegt. Sie verschiebt sich mit steigender Nutzlast zu kleineren Abständen von dem Vorderreifen hin und mit kleinerer Nutzlast zu größeren Abständen von dem Vorderreifen, wie dies durch den Doppelpfeil der Linie "Reichweitenbegrenzung" angedeutet ist.

Mit größerer Nutzlast wandert diese Linie somit hin zu geringeren Abständen von dem Vorderreifen, d.h. gemäß Figur 4 nach rechts.

## Patentansprüche

1. Loghandler mit einem Radlader-Grundgerät, an dem sich eine relativ zu dem Grundgerät bewegbare Arbeitsausrüstung befindet, die ein Werkzeug (W), insbesondere eine Holzgreifereinrichtung umfasst, wobei der Loghandler erste Mittel aufweist, die ausgebildet sind, die Nutzlast (NL) zu ermitteln, und dass der Loghandler zweite Mittel aufweist, die ausgebildet sind, dass diese basierend auf der durch die ersten Mittel ermittelten Nutzlast (NL) und basierend auf Geometriedaten des Loghandlers einen für die Standsicherheit des Loghandlers repräsentativen Parameter bestimmen **,** wobei die Arbeitsausrüstung einen Schwenkarm (S) und einen daran schwenkbar angeordneten Ausleger (A) umfasst **dadurch gekennzeichnet, dass** eine Steuereinrichtung vorhanden ist, die ausgebildet ist, dass bei Erreichen eines Grenzwertes der maximalen horizontalen Ausladung, welche durch eine Hubbewegung des Auslegers (A) hervorgerufen wird, durch automatisches Gegensteuern des Schwenkarms (S) verhindert wird, dass sich die horizontale Ausladung der Arbeitsausrüstung weiter erhöht.

2. Loghandler mit einem Radlader-Grundgerät, an dem sich eine relativ zu dem Grundgerät bewegbare Arbeitsausrüstung befindet, die ein Werkzeug (W), insbesondere eine Holzgreifereinrichtung umfasst, wobei der Loghandler erste Mittel aufweist, die ausgebildet sind, die Nutzlast (NL) zu ermitteln, und dass der Loghandler dritte Mittel aufweist, die ausgebildet sind, dass diese basierend auf der durch die ersten Mittel ermittelten Nutzlast (NL) und basierend auf Geometriedaten des Loghandlers eine Reichweitenbegrenzung der Arbeitsausrüstung in horizontaler Richtung vornehmen, wobei die Arbeitsausrüstung einen Schwenkarm (S) und einen daran schwenkbar angeordneten Ausleger (A) umfasst **dadurch gekennzeichnet, dass** eine Steuereinrichtung vorhanden ist, die ausgebildet ist, dass bei Erreichen eines Grenzwertes der maximalen horizontalen Ausladung, welche durch eine Hubbewegung des Auslegers (A) hervorgerufen wird, durch automatisches Gegensteuern des Schwenkarms (S) verhindert wird, dass sich die horizontale Ausladung der Arbeitsausrüstung weiter erhöht.

3. Loghandler nach Anspruch 1, **dadurch gekennzeichnet, dass** der Loghandler mit den kennzeichnenden Merkmalen das Anspruchs 2 ausgeführt ist.

4. Loghandler nach einem der vorhergehenden Ansprüche, **dadurch gekennzeichnet, dass** der Loghandler zumindest zwei lenkbare Räder aufweist und dass die Geometriedaten den Lenkwinkel der Räder umfassen.

5. Loghandler nach einem der vorhergehenden Ansprüche, **dadurch gekennzeichnet, dass** das Radlader-Grundgerät einen Vorderwagen (V) und einen Hinterwagen (H) aufweist und dass die Geometriedaten den Knickwinkel zwischen Vorder- (V) und Hinterwagen (H) umfassen.

6. Loghandler nach einem der vorhergehenden Ansprüche, **dadurch gekennzeichnet, dass** der Loghandler ein Display aufweist, in dem die Standsicherheit oder der Wert des dafür repräsentativen Parameters angezeigt wird.

7. Loghandler nach einem der vorhergehenden Ansprüche, **dadurch gekennzeichnet, dass** Mittel vorgesehen sind, die ausgebildet sind, dass beim Überschreiten eines für die Standsicherheit repräsentativen Parameters eine akustische Warnung ausgegeben wird.

8. Loghandler nach einem der vorhergehenden Ansprüche, **dadurch gekennzeichnet, dass** es sich bei dem Parameter um das resultierende Drehmoment um die Vorderreifen (VR) des Radlader-Grundgerätes handelt.

9. Loghandler nach einem der vorhergehenden Ansprüche, **dadurch gekennzeichnet, dass** in dem Loghandler ein Kennfeld hinterlegt ist, das den zulässigen Arbeitsbereich der Arbeitsausrüstung in Abhängigkeit der Höhe der Nutzlast (NL), der Abstand der Nutzlast (NL) von dem Vorderreifen (VR) des Radlader-Grundgerätes und von der Nutzlast (NL) selbst wiedergibt.

10. Loghandler nach einem der vorhergehenden Ansprüche, **dadurch gekennzeichnet, dass** der Loghandler eine vorzugsweise nutzlastabhängige Reichweitenbegrenzung der Arbeitsausrüstung in horizontaler Richtung aufweist.

11. Loghandler nach einem der vorhergehenden Ansprüche, **dadurch gekennzeichnet, dass** die Arbeitsausrüstung einen Schwenkarm (S) aufweist und dass eine Steuereinrichtung vorhanden ist, die ausgebildet ist, so dass bei Erreichen eines Grenzwertes der maximalen horizontalen Ausladung das manuelle Vorschwenken des Schwenkarms (S) unterbunden wird.

12. Loghandler nach einem der vorhergehenden Ansprüche, **dadurch gekennzeichnet, dass** die Arbeitsausrüstung einen Schwenkarm (S) und einen daran schwenkbar angeordneten Ausleger (A) und eine am Ausleger (A) angeordnete Holzgreifereinrichtung oder sonstiges Werkzeug (W) aufweist.

13. Loghandler nach Anspruch 12, **dadurch gekennzeichnet, dass** ein Schwenkzylinder (SZ) zum Verschwenken des Schwenkarms (S) relativ zu dem Radlader-Grundgerät und ein Hubzylinder (HZ) zum Verschwenken des Auslegers (A) relativ zu dem Schwenkarm (S) vorhanden sind.

## Claims

1. Log handler with a wheel loader base unit, on which is located a working equipment which is movable relative to the base unit and which comprises a tool (W), in particular a wood grabbing device, wherein that the log handler comprises first means which are configured to determine the payload (NL), and in that the log handler comprises second means which are configured to determine, based on the payload (NL) determined by the first means and based on geometric data of the log handler, a parameter which is representative of the stability of the log handler, wherein the working equipment comprises a swivel arm (S) and a boom (A) arranged pivotably thereon, **characterized in that** a control device is provided which is configured so that when a limit value of the maximum horizontal extension caused by a lifting movement of the boom (A) is reached, the horizontal extension of the working equipment is prevented from increasing further by automatically counteracting the swivel arm (S).

2. Log handler with a wheel loader base unit, on which is located a working equipment which is movable relative to the base unit and which comprises a tool (W), in particular a wood grabbing device, wherein the log handler comprises first means which are configured to determine the payload (NL), and in that the log handler comprises third means which are configured to carry out a range limitation of the working equipment in the horizontal direction on the basis of the payload (NL) determined by the first means and on the basis of geometric data of the log handler wherein the working equipment comprises a swivel arm (S) and a boom (A) arranged pivotably thereon, **characterized in that** a control device is provided which is configured so that when a limit value of the maximum horizontal extension caused by a lifting movement of the boom (A) is reached, the horizontal extension of the working equipment is prevented from increasing further by automatically counteracting the swivel arm (S).

3. Log handler according to claim 1, **characterized in that** the log handler is configured with the characterizing features of claim 2.

4. Log handler according to any one of the preceding claims, **characterized in that** the log handler comprises at least two steerable wheels and that the geometry data comprises the steering angle of the wheels.

5. Log handler according to any one of the preceding claims, **characterized in that** the wheel loader base unit comprises a front carriage (V) and a rear carriage (H), and **in that** the geometry data comprises the articulation angle between the front (V) and rear carriages (H).

6. Log handler according to any of the preceding claims, **characterized in that** the log handler comprises a display in which the stability or the value of the parameter representative thereof is indicated.

7. Log handler according to one of the preceding claims, **characterized in that** means are provided which are configured such that an acoustic warning is emitted when a parameter representative of the stability is exceeded.

8. Log handler according to any of the preceding claims, **characterized in that** the parameter is the resultant torque about the front tires (VR) of the wheel loader base unit.

9. Log handler according to any one of the preceding claims, **characterized in that** a characteristic diagram is stored in the log handler which reproduces the permissible working range of the working equipment as a function of the height of the payload (NL), the distance of the payload (NL) from the front tire (VR) of the wheel loader base unit and from the payload (NL) itself.

10. Log handler according to any one of the preceding claims, **characterized in that** the log handler has a preferably payload-dependent reach limitation of the working equipment in the horizontal direction.

11. Log handler according to any one of the preceding claims, **characterized in that** the working equipment comprises a swivel arm (S) and **in that** a control device is provided which is configured so that when a limit value of the maximum horizontal projection is reached, manual forward swiveling of the swivel arm (S) is prevented.

12. Log handler according to any one of the preceding claims, **characterized in that** the working equipment comprises a swivel arm (S) and a boom (A) pivotably arranged thereon and a wood grabbing device or other tool (W) mounted on the boom (A).

13. Log handler according to claim 12, **characterized in that** a pivot cylinder (SZ) for pivoting the swivel arm (S) relative to the wheel loader base unit and a lift cylinder (HZ) for pivoting the boom (A) relative to the swivel arm (S).

## Revendications

1. Manipulateur de grumes avec un engin de base de type chargeuse sur pneus, sur lequel se trouve un équipement de travail mobile par rapport à l'engin de base, qui comprend un outil (W), notamment un dispositif de préhension de bois, où le manipulateur de grumes présente des premiers moyens qui sont réalisés pour déterminer la charge utile (NL), et le manipulateur de grumes présente des deuxièmes moyens qui sont réalisés pour déterminer, sur la base de la charge utile (NL) déterminée par les premiers moyens et sur la base de données géométriques du manipulateur de grumes, un paramètre représentatif de la stabilité du manipulateur de grumes, où l'équipement de travail comprend un bras pivotant (S) et une flèche (A) agencée de manière pivotante sur celui-ci, **caractérisé en ce qu'**un dispositif de commande est présent, qui est réalisé de telle sorte que, lorsqu'une valeur limite de la portée horizontale maximale, provoquée par un mouvement de levage de la flèche (A), est atteinte, il est empêché, par une contre-commande automatique du bras pivotant (S) que la portée horizontale de l'équipement de travail augmente davantage.

2. Manipulateur de grumes avec un engin de base de type chargeuse sur pneus, sur lequel se trouve un équipement de travail mobile par rapport à l'engin de base, qui comprend un outil (W), notamment un dispositif de préhension de bois, où le manipulateur de grumes présente des premiers moyens qui sont réalisés pour déterminer la charge utile (NL), et le manipulateur de grumes présente des troisièmes moyens qui sont réalisés pour effectuer, sur la base de la charge utile (NL) déterminée par les premiers moyens et sur la base de données géométriques du manipulateur de grumes, une limitation de déport de l'équipement de travail dans la direction horizontale, où l'équipement de travail comprend un bras pivotant (S) et une flèche (A) agencée de manière pivotante sur celui-ci, **caractérisé en ce qu'**un dispositif de commande est présent, qui est réalisé de telle sorte que, lorsqu'une valeur limite de la portée horizontale maximale, provoquée par un mouvement de levage de la flèche (A), est atteinte, il est empêché, par une contre-commande automatique du bras pivotant (S), que la portée horizontale de l'équipement de travail augmente davantage.

3. Manipulateur de grumes selon la revendication 1, **caractérisé en ce que** le manipulateur de grumes est conçu avec les caractéristiques distinctives de la revendication 2.

4. Manipulateur de grumes selon l'une quelconque des revendications précédentes, **caractérisé en ce que** le manipulateur de grumes présente au moins deux roues orientables et **en ce que** les données géométriques comprennent l'angle de braquage des roues.

5. Manipulateur de grumes selon l'une quelconque des revendications précédentes, **caractérisé en ce que** l'engin de base de type chargeuse sur pneus présente un châssis avant (V) et un châssis arrière (H) et **en ce que** les données géométriques comprennent l'angle d'articulation entre le châssis avant (V) et le châssis arrière (H).

6. Manipulateur de grumes selon l'une quelconque des revendications précédentes, **caractérisé en ce que** le manipulateur de grumes présente un écran sur lequel s'affiche la stabilité ou la valeur du paramètre représentatif de celle-ci.

7. Manipulateur de grumes selon l'une quelconque des revendications précédentes, **caractérisé en ce que** des moyens sont prévus, qui sont réalisés pour émettre un avertissement sonore lorsqu'un paramètre représentatif de la stabilité est dépassé.

8. Manipulateur de grumes selon l'une quelconque des revendications précédentes, **caractérisé en ce que** le paramètre est le couple résultant autour des pneus avant (VR) de l'engin de base de type chargeuse sur pneus.

9. Manipulateur de grumes selon l'une quelconque des revendications précédentes, **caractérisé en ce qu'**un champ caractéristique est enregistré dans le manipulateur de grumes, qui reflète la plage de travail admissible de l'équipement de travail en fonction de la hauteur de la charge utile (NL), de la distance entre la charge utile (NL) et le pneu avant (VR) de l'engin de base de type chargeuse sur pneus et de la charge utile (NL) elle-même.

10. Manipulateur de grumes selon l'une quelconque des revendications précédentes, **caractérisé en ce que** le manipulateur de grumes présente une limitation de déport de l'équipement de travail dans la direction horizontale, de préférence en fonction de la charge utile.

11. Manipulateur de grumes selon l'une quelconque des revendications précédentes, **caractérisé en ce que** l'équipement de travail présente un bras pivotant (S) et **en ce qu'**un dispositif de commande est présent, qui est réalisé de telle sorte que, lorsqu'une valeur limite de la portée horizontale maximale est atteinte, le pivotement manuel du bras pivotant (S) est empêché.

12. Manipulateur de grumes selon l'une quelconque des revendications précédentes, **caractérisé en ce que** l'équipement de travail présente un bras pivotant (S) et une flèche (A) agencée de manière pivotante sur celui-ci, et un dispositif de préhension de bois ou un autre outil (W) agencé sur la flèche (A).

13. Manipulateur de grumes selon la revendication 12, **caractérisé en ce qu'**un vérin de pivotement (SZ) est présent pour faire pivoter le bras pivotant (S) par rapport à l'engin de base de type chargeuse sur pneus et un vérin de levage (HZ) pour faire pivoter la flèche (A) par rapport au bras pivotant (S).
